# EUROPÄISCHE PATENTSCHRIFT

(11) **EP 1 058 632 B1**
(45) Veröffentlichungstag und Bekanntmachung des Hinweises auf die Patenterteilung: **18.12.2002**
(21) Anmeldenummer: 98959867.7
(22) Anmeldetag: 10.11.1998
(51) Int. Cl.: B60R 13/08, F02B 77/11

(54) **BODENPLATTE ZUM ABSCHIRMEN VON MOTORBEREICHEN VON KRAFTFAHRZEUGEN NACH UNTEN**
MOTOR VEHICLE ENGINE AREA DOWNWARD PROTECTION BASE PLATE
PLAQUE DE BASE POUR PROTEGER VERS LE BAS LA ZONE MOTEUR DE VEHICULES AUTOMOBILES

(30) Priorität: 05.03.1998 DE 29803904 U
(43) Veröffentlichungstag der Anmeldung: 13.12.2000
(73) Patentinhaber: FAIST Automotive GmbH & Co. KG, 86381 Krumbach (DE)
(72) Erfinder: PFAFFELHUBER, Klaus, D-89312 Günzburg (DE); SCHWEIGGART, Franz, D-89284 Pfaffenhofen (DE); LACHENMAIER, Peter, D-89367 Waldstetten (DE)
(74) Vertreter: Müller, Frank Peter, Dipl.-Ing.
(86) Internationale Anmeldenummer: EP9807167
(87) Internationale Veröffentlichungsnummer: WO99044862

(56) Entgegenhaltungen:
- EP-A- 0 439 432
- EP-A- 0 891 917
- DE-A- 3 346 421

## Beschreibung

In Motorbereichen von Kraftfahrzeugen entsteht neben Lärm auch Hitze, weshalb es bekannt ist, den Motorbereich möglichst gut gegen die Weiterleitung von Schallenergie und Wärmeenergie abzuschirmen.

Die Erfindung bezieht sich auf eine Bodenplatte der im Oberbegriff des Anspruchs 1 genannten Gattung. Diese besteht aus einer Verbundschicht, welcher der Platte die erforderliche Steifigkeit im Betrieb verleiht und darüber hinaus schalldämmende bzw. schalldämpfende und auch hitzedämmende Eigenschaften aufweist.

Eine solche Bodenplatte ist bereits bekannt (DE-PS 33 46 421) ; ein am weitesten nach unten ragender Teil ist dadurch nach oben einfederbar, daß er an Rändern flexibel angelehnt ist. Beim Befahren unebenen Geländes oder beim Einsinken der Ränder in weichen Untergrund oder beim Überfahren von auf der Fahrbahn befindlichen Gegenständen ist die nach unten ragende Auswölbung eine der gefährdetsten Teile an der Unterseite des Kraftfahrzeugs und daher stark stoßanfällig.

Darüber hinaus ist die Verwendung von Aluminium zur Abdeckung von Abschirmteilen bekannt (EP-A-0 439 432).

Der Erfindung liegt die Aufgabe zugrunde, die gattungsgemäße Bodenplatte mit einfachen Mitteln dahingehend zu verbessern, daß bei Gegenstoßen eines Gegenstands von unten an die Auswölbung die Bodenplatte nicht gänzlich oder auch nur teilweise abgerissen bzw. eingerissen wird, sondern diese auch nach Auftreffen eines solchen Hindernisses ihre Funktion weiterhin gut erfüllt, ohne daß komplizierte Zusatzelemente, wie Dichtungspuffer, angewendet werden müssen.

Die Erfindung ist im Anspruch 1 gekennzeichnet.

Bei der Erfindung weist der Verbundteil mindestens einen Trennschnitt auf, auf dessen Rand sich ein nach oben drückbarer, die Auswölbung aufweisender Abschirmteilunmittelbar abstützt. Entsteht ein schlagartiger Druck von unten auf die Auswölbung, dann hebt sich der Abschirmteil vom Rand am Trennschnitt ein Stück weit hoch, um nach Überwinden des Druckes sofort wieder auf den Rand des Trennschnitts zurückzuschnappen. Im übrigen bildet der Abschirmteil mit der Bodenplatte einen gemeinsamen Verbundteil bei dieser Ausbildung. Die Aluminiumabdeckung in Richtung zum Motorraum schirmt große Hitze ab, so daß eine Multifunktion erfüllt wird.

Dabei ist der Trennschnitt unter einem Neigungswinkel α zur Vertikalen geneigt ausgebildet. Der Neigungswinkel sollte so angelegt sein, daß der zur Auswölbung gehörende Abschirmteil der Verbundschicht bei Druck von unten sich von dem als untere Abstützfläche dienenden Trennschnitt in der Verbundschicht löst und ein Stück weit nach oben hochdrückbar ist. Dabei kann sich der Krümmungsradius des zur Auswölbung gehörenden Abschirmteils durch Streckung desselben vergrößern, da der durch den Neigungswinkel gebildete Trennschnitt auch eine Verschiebung zwischen den beiden durch den Trennschnitt getrennten Teilen der Verbundschicht erlaubt.

Da der Trennschnitt jeweils eine Überlappung von an der Verbundschicht beteiligten Schichtteilen gewährleistet, wird die Abschirmwirkung der Bodenplatte im Auswirkungsbereich nicht beeinträchtigt. Die Wahl eines elastisch verformbaren Materials für die Trägerschicht stellt darüber hinaus sicher, daß die sich vorübergehend hochgehobene oder verschobene Position des zur Auswölbung gehörenden Abschirmteils wieder in die ursprüngliche Ruhelage zurückstellt.

Ein Ausführungsbeispiel der Erfindung wird nun anhand der Zeichnungen näher erläutert. Dabei zeigen.
- Figur 1: eine erfindungsgemäße Bodenplatte von unten und
- Figur 2: die in Figur 1 gezeigte Bodenplatte von hinten und
- Figuren 3 und 3a: schematisches Querschnittsteilbilder gemäß dem Schnitt I-I von Figur 1 durch den Bereich der Auswölbung und der Nachbarbereiche derselben in der Bodenplatte in verschiedenen Positionen.

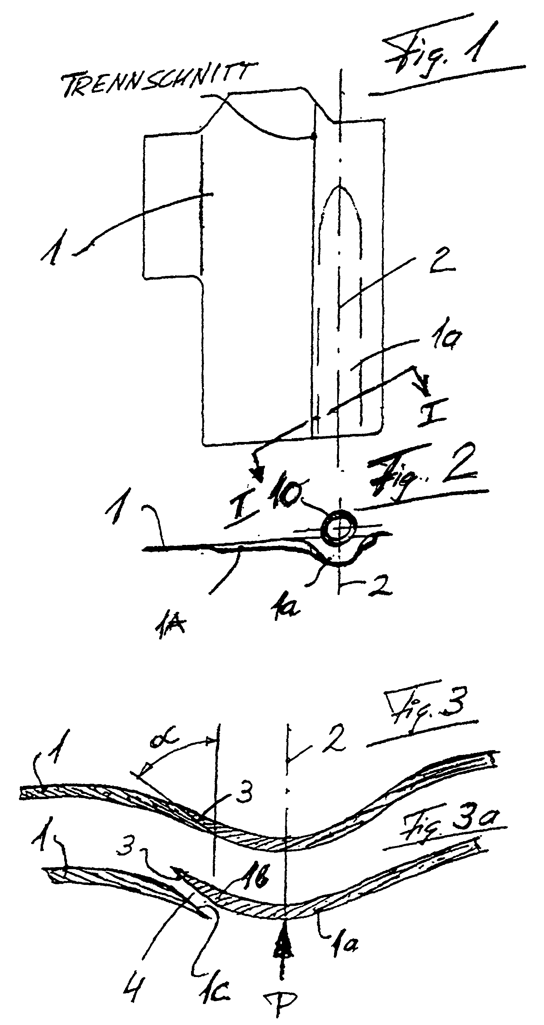

Die Bodenplatte 1 nach Figur 1 ist eine Verbundschicht, bestehend aus einer Trägerschicht aus GMT (glasmattenverstärktem Thermoplast), LFG (Langfaser-Granulat) oder dergl. und einer in Richtung zum Motor weisenden Aluminiumabdeckung in Form einer dünnen Aluminiumfolie, die fest mit der Trägerschicht verbunden und mit dieser zusammen verformt ist. Über einen Teil der Bodenplatte 1 zieht sich in Richtung der Längsachse 2 der Auspuffleitung 10 eine nach unten (Fig. 2) etwa halbkreisförmig abgerundete Auswölbung 1a hin, während über die Hauptfläche der Bodenplatte 1 hier im einzelnen nicht dargestellte Schallabsorber 1A aufgebaut sind, um den vom Motor abgestrahlten Schall zu einem großen Teil zu absorbieren und gegenüber dem Außenraum nach unten abzuschirmen.

Der Einfachheit halber ist die mehrschichtige Verbundschicht in den Zeichnungen nur einschichtig dargestellt.

Bei der Ausbildungsform von Figur 3 ist die Bodenplatte 1 mit der Auswölbung 1a ein einheitliches Aggregat der Verbundschicht, die nach der Herstellung und Verformung etwas seitlich zur Längsachse 2 versetzt unter dem Neigungswinkel α zur Vertikalen durch einen Trennschnitt 3 aufgeschnitten ist, so daß zwei sehr spitzwinkelige Ränder übereinanderliegen. Stößt ein Gegenstand unter dem Druck P gemäß Figur 3a von unten an die Auswölbung 1a an, dann wird der dazu gehörende Abschirmteil 1b etwas nach oben gedrückt, so daß ein spaltförmiger Abstand 4 zwischen den beiden spitzen Rändern im Bereich des Trennschnitts 3 entsteht. Läßt der Druck nach, federt der Abschirmteil 1b wieder in den in Figur 3 gezeigten Ausgangszustand zurück, in dem die Schnittflächen des Trennschnittes 3 wieder aneinander anliegen und die untere Abstützfläche 1c zur Abstützung des Abschirmteils 1b zur Verfügung steht.

Der Neigungswinkel α sollte zwischen 35 und 55° betragen.

## Patentansprüche

1. Bodenplatte (1) zum Abschirmen von Motorbereichen von Kraftfahrzeugen nach unten, mit einer schalldämpfenden und/oder -dämmenden geformten Verbundschicht und mit einer im eingebaute Zustand im Auspuffbereich nach unten ragenden tiefer liegenden Auswölbung (1a), wobei die Verbundschicht einerseits eine Rand- oder Trennstelle (1c) aufweist, auf deren Rand sich ein nach oben drückbarer, die Auswölbung (1a) bildender Abschirmteil (1b) abstützt und wobei andererseits die Auswölbung (1a) mit der Bodenplatte (1) ein einheitliches Aggregat der Verbundschicht bildet.
**dadurch gekennzeichnet,**
**daß** die Verbundschicht an der zum Motor weisenden Seite eine Aluminiumabdeckung aufweist und daß die Rand- oder Trennstelle (1c) als unter einem solchen Neigungswinkel (α) zur Vertikalen geneigter Trennschnitt (3) der Verbundschicht ausgebildet ist, daß der zur Auswölbung (1a) gehörende Abschirmteil (1b) der Verbundschicht von der als unterer Abstützfläche dienenden Rand- oder Trennstelle (1c) nach oben frei hochdrückbar ist.

2. Bodenplatte nach Anspruch 1,
**dadurch gekennzeichnet,**
**daß** der Neigungswinkel (α) zwischen 35° und 55° beträgt.

## Claims

1. Base plate (1) for the downward protection of engine regions in motor vehicles, comprising a silencing and/or sound-reducing shaped compound layer and including a buckling portion (1a) at a lower level, which, in the built-in condition, projects downwards in the zone of the exhaust pipe, with said compound layer, on the one hand, comprising an edge or parting location (1c) having an edge on which a cushioning element (1b) is supported, which can be pressed upwards and which constitutes said buckling portion (1a), and, on the other hand, with said buckling portion (1a) cooperating with said base plate (1) so as to form a homogeneous assembly of said compound layer,
**characterised in**
**that** said compound layer presents an aluminium cover on the side facing the engine, and that said edge or parting location (1c) is configured in the form of a parting cut (3) of said compound layer, which is inclined relative to the vertical at such an angle of inclination (α) that said cushioning element (1b) of said compound layer, which forms part of said buckling portion (1a), can be freely urged upwards by said edge or parting location (1c) that serves as lower supporting surface.

2. Base plate according to Claim 1,
**characterised in**
**that** said angle of inclination corresponds to a value between 35° and 55°.

## Revendications

1. Plaque de base (1) à protéger, vers le bas, des zones de moteur des véhicules automobiles, comprenant une couche en matériau composite et façonné, insonorisant et/ou antisonique, et comprenant une convexité (1a) à un plus bas niveau, qui, en état intégré, fait saillie en bas dans la zone du tuyau d'échappement, ladite couche composite, d'un côté, comprenant un point de bord ou de coupure (1c) ayant un bord sur lequel s'appuie un élément écran (1b) apte à être pressé en haut et formant ladite convexité (1a), et, d'autre côté, ladite convexité (1a) coopérant avec ladite plaque de base (1) afin de former un ensemble homogène de ladite couche composite,
**caractérisée en ce**
**que** ladite couche composite présente un recouvrement en aluminium du côté dirigé vers le moteur, et en ce que ledit point de bord ou de coupure (1c) est configuré sous forme d'une coupure de séparation (3) de ladite couche composite, qui est inclinée relativement à la verticale à un tel angle d'inclinaison (α), que ledit élément d'écran (1b) de ladite couche composite, qui constitue une partie de ladite convexité (1a), soit apte à être pressé librement en haut par ledit point de bord ou de coupure (1c) servant en tant qu'une surface d'appui inférieure.

2. Plaque de base selon la revendication 1,
**caractérisée en ce**
**que** ledit angle d'inclinaison correspond à une valeur entre 35° et 55°.
